# EUROPEAN PATENT SPECIFICATION

(11) **EP 1 993 256 B1**
(45) Date of publication and mention of the grant of the patent: **23.11.2016**
(21) Application number: 07290648.0
(22) Date of filing: 18.05.2007
(51) Int. Cl.: H04L 29/06, H04M 3/22

(54) **Software module for supporting internet protocol lawful interception**
Softwaremodul zur Unterstützung staatlicher Internetprotokoll-Abhörung
Module logiciel pour supporter l'interception légale du protocole Internet

(43) Date of publication of application: 19.11.2008
(73) Proprietor: ALCATEL LUCENT, 92100 Boulogne-Billancourt (FR)
(72) Inventor: Ansiaux, Arnaud, 91620 Nozay (FR); Onfroy, Emmanuel, 93300 Aubervilliers (FR)
(74) Representative: Wetzel, Emmanuelle

(56) References cited:
- EP-A- 1 484 892
- WO-A-02/093838
- "Universal Mobile Telecommunications System (UMTS); 3G security; Handover interface for Lawful Interception (LI) (3GPP TS 33.108 version 6.8.2 Release 6); ETSI TS 133 108" ETSI STANDARDS, EUROPEAN TELECOMMUNICATIONS STANDARDS INSTITUTE, SOPHIA-ANTIPO, FR, vol. 3-SA3, no. V682, January 2005 (2005-01), XP014028214 ISSN: 0000-0001
- "Lawful Interception (LI); Concepts of Interception in a Generic Network Architecture; ETSI TR 101 943" ETSI STANDARDS, EUROPEAN TELECOMMUNICATIONS STANDARDS INSTITUTE, SOPHIA-ANTIPO, FR, vol. SEC-LI, no. V211, October 2004 (2004-10), XP014015467 ISSN: 0000-0001

## Description

### Background of the invention

The invention relates to a software module for providing a network or system operator with information about options for deploying internet protocol (IP) lawful interception (LI) capabilities.

A method for lawful interception in IP networks is e.g. known from EP 1 701 503 A1.

Internet protocol (IP) services are used by almost every natural and legal person in developed countries. Sometimes, IP services are used with criminal intent, or criminals use IP services. As a consequence, legal enforcement agencies (LEAs) in many countries demand options for interception (typically accessing information) of IP traffic. Network providers (system operators, access providers, service providers) have to provide these options. An IP (traffic) interception mandated by a LEA is referred to as lawful interception (LI). Typical LEAs include criminal courts or state attorneys.

The fast and complex evolution of IP networks makes LI more and more difficult and constitutes a real technological challenge. In existing public switched telephone networks (PSTN), for example, LI is performed by installing a physical tap on the telephone line of the user to be intercepted (=target). However, in IP networks, an interception of telephone calls can no more be guaranteed based on tapping a physical line.

Recent developments in the internet, in IP technologies (VOIP, peer to peer), etc.) and IP services (email, e-business etc.), and finally an overall convergence towards IP gives rise to the problem of end-user control. This problem includes, in particular,
- the multiplication of telecom operators and internet service providers (ISP),
- access to a huge number of different technologies for end-users, including fixed networks (DSL, optical network, et.) and wireless networks (GSM, GPRS, UMTS, WiFi, WiMAX, etc.), with their interoperability and security issues,
- personal end-user devices allowing camouflage functions, e.g. for masking the source of a target, distribution in a multitude of terminals, or cryptographic functions,
- the huge amount of data necessary to be collected, filtered and/or treated in case of interception.

IP interception measures can be
- defined in different manners, in particular "target based" (i.e. learning about the IP activities of a particular end-user), "monitoring based" (i.e. monitoring the activities of a set of users, at a particular IP service, or according to specific usage criteria such as time), or "data traffic retention" (i.e. blocking IP data traffic of a user, service, etc.)
- done at an access part, or at an aggregation, or also directly at the core of the network,
- applied at different levels of a network (OSI layered model or IP layered model),
- performed by active systems (e.g. traffic replication embedded in the network elements) or passive systems (e.g. traffic replication using probes and filtering).

In the state of the art, for controlling end users in IP networks, no unique and simple solution exists for making IP lawful interception. There are only a number of isolated interception concepts, working in specific situations only (e.g. with specific network equipment, or with specific IP services, or with specific LI tasks). An example for such an isolated interception concept can be found in EP 1 701 503 A1. Therefore, to plan and define interception processes in the IP world is rather difficult because of the variety of circumstances and variables that have to be considered at the same time.

### Object of the invention

It is the object of the invention to facilitate and accelerate IP lawful interception, in particular to facilitate finding appropriate LI measures upon a LEA request.

### Short description of the invention

This object is achieved, in accordance with the invention, by a software module (IP LI DM) for providing a network or system operator with information about options for deploying internet protocol (IP) lawful interception (LI) capabilities, wherein the software module is suitable for performing the following steps when run on a computer:
F1: receive interception orders from a legal enforcement agency (LEA), wherein the interception orders comprise initial arguments about a target to be intercepted;
F2: automatically send information requests to:
   - network services about the IP activities of said target in order to enrich the initial arguments about said target and gather information about the target behaviour on IP services;
   - topology management tools and/or directly to network equipment (NE) to find available lawful interception (LI) functions within existing network equipment (NE) around the target;
F3: receive answers to said information requests from the different network services, topology management tools and/or network equipments, and correlate the available information, i.e. initial arguments from the legal enforcement agency (LEA) and said answers, to determine suitable interception measures;
F4: display the determined suitable interception measures and/or initiate the determined interception measures based on network operator or system operator decision.

The invention presents a tool for supporting the planning and execution of IP lawful interception. The tool is a software program (or a device with the software program implemented) installed in the infrastructure of a network operator (or system operator).

The network operator, respectively the software module installed in his infrastructure, becomes a principal actor in planning and performing efficient IP interception. As one of the core functions of the inventive software module, the initial LEA criteria for interception are enriched by information, in particular end-user information, managed by the network operator inside his network or accessible through service level agreements (SLAs) with other operators or service providers. Note that directly involving the network provider in information gathering makes information available that could hardly be accessed otherwise.

As a second core function, the information gathered is analysed (typically by an expert system) to find the most effective solutions for the interception task. The software module checks whether interception concepts known e.g. from a database are applicable and effective in the current case. In this way, possible interception measures are found and presented to the network operator, typically with several alternatives categorized or classified with priorities by the amount of effort, required time until start of the interception, criticality, costs, efficiency, or the like. The network operator can then choose and/or act accordingly.

Typical measures include proposing the activation of existing interception capabilities in the network, and/or proposing the installation of LI probes in the network (i.e. creating new interception capabilities, typically including installation of additional network equipment or additional software necessary for the LEA interception order).

By means of the invention, an intelligent IP LI management tool is provided. With this tool, LI can be established fast and efficiently.

This innovation is mostly "target based" but could also be used for "monitoring based" interception solutions. Finally, this innovation includes both active and. passive systems.

### Preferred variants of the invention

In a preferred embodiment of the inventive software module, the Software module is installed in the normalized LI administration function (LIAF) according to the LI ETSI (European Telecommunications Standards Institute) standard, in particular wherein the software module is linked to the LEA administration function (LEAAF) via the HI1 (Handover Interface) interface. For details, see also ETSI LI standard interfaces of ES 201 671. Preferably, the software module is in accordance with said LI ETSI standard. Respecting the LI ETSI standard, the inventive software module is very effective, reliable, prepared for future developments and interoperable with many other management systems.

Further preferred is an embodiment, wherein the software module is interfaced (interconnected) with an IP multimedia subsystem (IMS), in particular wherein the IP multimedia subsystem is part of a next generation network (NGN).This type of architecture is managed by the operator, so it is possible to ensure reliable IP interception. Typically, the IMS is standardized.

A further advantageous embodiment is characterized in that during step F2, information about said target which is managed by a network operator at different layers with respect to the OSI model is requested, in particular wherein said layers range from layer 2 up to layer 7. The information obtained can be used to develop interception measures at corresponding layers. Note that interception at upper levels is preferred, but if interception at upper levels is difficult, also lower levels may be used. By spreading the interception options to lower levels, interception should be possible even if the target tries to camouflage its activities with end-user devices (which typically have access to upper levels only).

In a further preferred embodiment of the inventive software module, during step F2, the network services to which requests are sent to include
- an authentication server, in particular a Radius server,
- and/or IMS enablers, in particular a reachability server or a presence server or a user profile server,
- and/or Profile Directory,
- and/or a billing server.

The mentioned network services can provide particularly valuable end user (target) information:
A Radius server provides authentication, authorization and accounting (AAA) RFC standard services. The monitoring module of Radius server can be used,
as well as some applicative logs which are collected by the Radius Log Collector. Moreover, the Log repository stores applicative logs, system logs and
mails are stored. Information such as username, password, session, dynamic IP address, can be collected.

An IMS enabler can provide information about the current location and actual different connections of the target, the type and technical characteristics of the target device(s) (network and service configuration data), and finally about the main habits and the interest domains of the target (person and user configuration data).

A Profile Directory, e.g. an LDAP directory, specified in a series of IETF Standard Track RFCs, might represent people, organizational units, or groups of people of relevance.

A billing server provides information particularly about the target's habits and the different correspondents.

Note that during step F2, topology management tools and/or network equipment to which requests are sent are typically directly accessed using standard network management protocol (e.g.: SNMP standard protocol). In a further preferred embodiment of the invention, during step F3, the determined measures include proposals of activation of already available LI functions of deployed network equipment (NE), and/or proposals of installation of LI probes at specific locations. Activation of existing LI functions within the network is inexpensive and quickly available. Note that if necessary, the software module can also provide information to the operator about how the activation of the available LI function can be done. By proposing new LI probes, measures specifically tailored for the LEA interception orders can be made available.

Preferred is further an embodiment, wherein during step F3, several alternative suitable measures to make the interception are determined,

in particular wherein the alternative suitable measures are classified with respect to the interception distance to the target and/or with respect to the time required until the suitable measure is ready for LI operation. By providing alternatives, the operator can choose the best measures for the present case. In general, short interception distances are preferred when several alternatives are available. Interception near the target will accelerate the post analysis. The interception distance is particularly taken into account when installing new LI probes. In case the LEA demand indicates high urgency, quickly available (operable) solutions are preferred, even if they do not provide as information as otherwise possible. In contrast, if the LEA demand is not that urgent, solutions which provide the most information or the most reliable information are preferred.

Particularly preferred is an embodiment of the inventive software module, characterized in that during step F3, for correlating the available information and the determining of suitable measures, an expert system, which is a program made up of a set of threshold-based rules included in a database, is used. The expert system provides artificial intelligence and job aspects to the software module. It is a system that utilizes what appears to be reasoning capabilities to reach conclusions. The expert system will analyze collected information from step F2 and about a specific class of problems, as well as providing mathematical analysis of the problem(s), and, depending upon their design, recommend a course of user (operator) action in order to solve the problem(s) and provide different alternatives for Interception deployment. In the most simple case, the database contains information about a large number of possible interception concepts, known per se in the state of the art. For each of the concepts, there are criteria when it is applicable or not, and preferably also criteria about its effectiveness in certain circumstances. After the collection of the available information in step F2 has been completed, all known interception concepts are checked for applicability for the desired interception and efficiency in the present case. All applicable or the most efficient and applicable concepts are proposed to the operator. The software module can check as many concepts as desired (and loaded to the data base), i.e. much more than a typical human being can have in mind. If new interception concepts are found, the database can be updated.

An advantageous further development of this embodiment, is characterized in that said data base is separate from the program code of the software module (the main goal of which is to determine the different alternatives for the interception deployment at the network level), and that the set of rules of the data base are definable by the network operator or the user of the system. In other words, the rules database can be completely administrated by the network operator. In particular, the operator can implement his preferences when several interception measures are available, of he can exclude certain measures according to the local border conditions (such as legal restrictions, or access to physical equipment, access to neighbouring networks, etc.).

Also within the scope of the invention is an IP interception device, characterized in that the IP interception device has installed an inventive software module as described above.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.
- Fig. 1: shows a schematic of a software architecture in accordance with the LTSI standard, including an inventive software module;
- Fig. 2: shows a schematic general overview of an IP deployment process for an IMS network, including an inventive software module.

The invention presents a software module, or IP LI deployment module, for supporting a network operator (or system operator) in finding and choosing LI measures upon a request of a LEA.

The inventive software module is typically used within a Next Generation Network for telecom operators, and particularly within the IMS (IP Multimedia Subsystem). IMS is not a product, but rather an internet architecture that provides end users with anytime, anywhere access to services that blend voice, video and data content. Moreover, because this architecture is managed by the operator, it is possible to ensure reliable IP interception by means of the invention.

The inventive IP LI deployment module is typically included into an overall decision making tool, or IP monitoring tool. The inventive module enhances efficiently IP interception by providing useful information to operators to find the best place to make physically the interception.

The invention facilitates the activation of interception functions inside the right network equipment and/or finding the right LI probe, in particular probe location and function, thus accelerating the capture phase and so the interception. In order to increase the efficiency of the interception, one idea is to make the interception the closest as possible to the target. Another possibility, depending of the technical capabilities of network elements to make this interception, the interception could be executed on the target's contacts or addressed services.

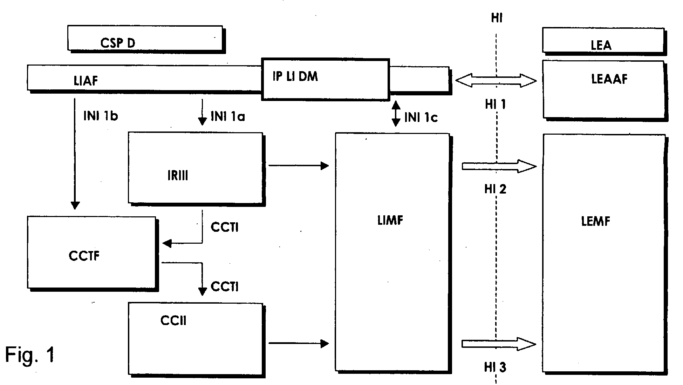

**Figure 1** illustrates a possible implementation of an inventive software module in accordance with the LI ESTI standard. The inventive software module can be installed in the normalized LI administration function (LIAF) and so will be directly at the interface with LEAs, through the HI1 interface, but also with internal interfaces of the network operator (INIx).

In Fig. 1, the following abbreviations are used:
- CSP D: CSP domain
- LIAF: lawful/legal interception administration function
- IP LI DM: IP LI deployment module (=inventive software module)
- CCTF: content of communication trigger function
- IRIII: intercept related information internal interception
- LIMF: lawful interception mediation function
- HI: handover interface (HI1; HI2,...)
- CCII: content of communication internal interception
- CCTI: content of communication trigger information
- INI: internal network interface (INI 1 a, INI 1b,... )
- LEA: legal enforcement agency
- LEAAF: LEA administration function
- LEMF: law enforcement monitoring facility

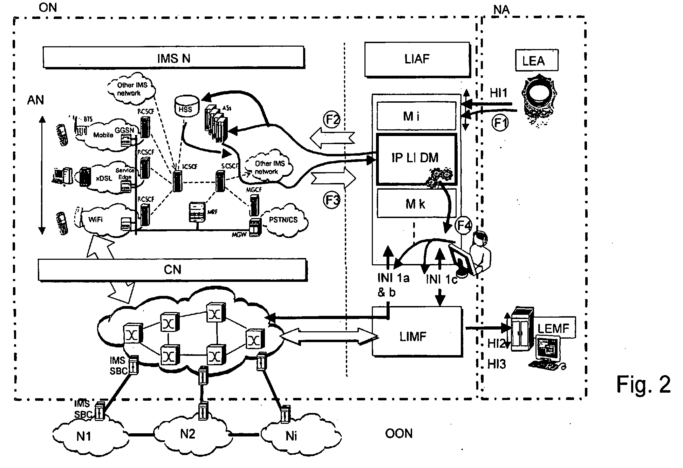

**Figure 2** illustrates a general overview of the IP deployment process for an IMS network, in accordance with the invention, including an inventive software module. As already mentioned, the inventive software module (IP LI DM) is linked to operator network services to obtain the most relevant information on an end-user (target) to determine technical alternatives (or options) for a requested interception.

In Figure 2, the following additional abbreviations are used:
- ON: operator network
- IMS N: IMS network
- AN: access network
- CN: core network
- M: module (M i, M k, ...)
- NA: national agency
- N: network (N1, N2,...)
- OON: other operator network
- P-CSCF: Proxy Call State Control Function
- I-CSCF: Interrogating Call State Control Function
- S-CSCF: Server Call State Control Function
- AS: Application Server
- HSS: Home Subscriber Server
- MRFC: Multimedia Resource Function Controller
- SBC: Session Border Controller

The inventive software module comprises four main functionalities F1 through F4 (see Fig. 2), which are used sequentially, and which shall be explained in further detail by way of example below.

### Function 1 (F1)

Function F1 comprises receiving LEA interception orders and analyse all the arguments transmitted on the target to be intercepted. This information is also called initial or basic LEA arguments. The LEA orders comprise
- information about the target (e.g. name, IP address, phone number, etc.). Typically, the software module will predefine specific types of information about the target;
- interception order(s) with respect to the target (e.g. provide the content of any correspondence of the target with third parties, or report all third parties contacted, or find out all internet sites visited by the target, or block all correspondence of the target with a particular third party); again, the software module will typically predefine specific types of orders.

### Function 2 (F2)

Function F2 comprises sending automatically several requests to different network services from IMS and network management platforms, to enrich and enlarge initial LEA arguments. All the information obtained will be used as inputs for all the algorithms implemented in the software module in step F3.

Function F2 can be summarized as requesting additional arguments from different network services. Until recently, telecom operators have met the service transformation challenge by overlaying individual stovepipe services onto their IP backbone infrastructure. Today they are increasingly looking to transform their networks to provide fixed and wireless services from a combinational services perspective over an end-to-end IP network. IMS architecture makes this seamless interoperability of network and applications possible so that operators can rapidly deploy new personalized services. It is a modular and open standards internet design that uses a rich array of standardized functions and protocols, such as authentication, security, end user and services databases, session managers. Since user data is stored in a common location and provisioned from a single point, it can be accessed by any device on any network.

In this environment, IMS enablers, such as presence and reachability servers, telephony application server and users and services databases can be used by the inventive IP LI deployment module (IP LI DM) to enrich initial information on the target. In this architecture it is also possible to control who can contact who and when.

Table 1 below provides most of the services which could be addressed by the inventive IP LI deployment module to determine after the step of analysis and correlation phase where the interception, at the transport layer, have to be done.

**Table 1**

| layer | function/equipment |
|---|---|
| user portal/ | - network management, |
| OSS/BSS | - subscriber portal, |
| | - order entry, |
| | - policy management, |
| | - service assurance, |
| | - service billing, |
| | - service creation |
| NMS/EMS, | - NMS, EMS; |
| common enabling | - user profiles, WS/orchestration, policy management |
| and controlling | - billing system, |
| systems | - content security (e.g.: DRM) |
| Applications | - third party servers and applications |
| | - SP applications (including network capabilities): email, enterprise hosting service, conversational and enabling services, e.g. conferencing, presence localization, online game services, video delivery services |
| Transport network | - home network, |
| | - access network, |
| | - IP service edge, |
| | - service networks |

Regarding the above description of the IMS architecture, the function F2 can be applied with a lot of different possibilities because most of the services and protocols used are standardized. Therefore it is possible to make some requests in the different data bases using open interfaces, and make some treatments inside standardized log files to find relevant information on the target end user. It is also possible to discover technical IP interception capabilities of network elements at the transport layer. All these information should then be gathered and correlated by the function F3.

In the following, examples for requests to existing network services are presented:
▪ Request to the network management server (Topology Manager). The objective of this request is to discover network topology and more precisely Interception functionalities already deployed and available in network equipments;
▪ Request to the IMS reachability and presence servers and user profile server. The objective of this request is to enlarge initial LEA arguments. Only the operator has a complete view of end-users capabilities to communicate through various personal devices (mobile phone, PDA, mobile PC, etc). The result could be used to determine the type of probes necessary and the level of Interception to be deployed;
▪ Request to billing server or data retention server. The objective of this request is to enlarge initial LEA arguments. Statistics could be performed for example on the main call destination(s). Thus interception does not need not to be focused on the target alone, but can also focus on the target destination.
▪ Request to Mobile IP server. The objective of this request is to obtain the current location of the end-user to make efficient interception deployment (Note: This information could also be obtained with mobile geolocalization services for instance if necessary).

### Function F3:

Function F3 comprises receiving and analysing the different answers from the requests that have been sent to the network services. Algorithms implemented inside the inventive software module correlate all this information (and initial LEA information) to determine probes needed (type, protocol to handle, network location) and LI functions to activate into deployed network elements.

Therefore, function F3 can be summarized as receive answers, and correlate this information to determine appropriate measures. The correlation part of the inventive IP LI deployment module is mostly based on an expert system based on a rule engine which applies a set of threshold-based rules included in a data base separated from regular program code and specific algorithms which will be used for the function F4.

All these rules should be defined by the operators by using standard technologies and rule language (e.g.: Complex Event Processing (CEP) engine).

Depending of the capacities of the different network elements at the transport network layer (see table 1) and the urgency of the interception, the results of the function F3 can be for instance for the function F4 to redirect the traffic by modifying remotely the IP table of the equipment, make a copy of the traffic directly on the equipment for a postpone treatment, etc.

### Function F4:

Function F4 comprises displaying the alternatives (options) for efficient LI probes deployment and activation of the network equipment (NE) LI functions in a graphical user interface, using API and existing topology network manager.

Then the operator can decide on the measures to be taken. The software module can, as an option, include functionalities to execute chosen measures, and/or functionalities to transfer collected data after some basic aggregation and correlation to the LI mediation server or directly LEMF.

Note that the inventive software module can be closely linked to, or include, a data retention function (for blocking data traffic of the target) which becomes mandatory for telecom operators.

### Lawful Interception example

In the following, the added-values of the inventive software module shall be presented by way of an interception example, using the inventive software module as an assisting tool.

The LEA sends an interception order to gather all the information about a target Mr. X. The LEA gives to the operator a limited number of arguments: address, birthdate and a fixed phone number.

The first added-value of the inventive software module is to send requests to other network services to enrich or precise the LEA interception order. The results could be for instance :
▪ Answer from the network management server: All the access network equipments around Mr. X's home do not have embedded interception capabilities. Therefore specific probes must be deployed or the interception must be planned at the aggregation or in the core network with other constraints to handle.
▪ Answer from the reachability and presence server: Mr. X has two mobile phones and an ADSL Internet connection and uses it generally during night between 11AM and 2PM. Therefore interception should be enlarged to his two mobile phones and to his ADSL connection (here different equipments must be considered). For data interception, a first step should be to determine the type of data flow (VoIP, HTTP, FTP, P2P, etc.) and then analyze the content if possible.
▪ Answer from the billing server or the data retention server: Mr. X calls regularly his parents during weekend and Miss Y every night around 10 AM. Therefore the interception should be enlarged by making interception not only on the different calls performed by Mr. X, but in a deported manner by listening calls for Mr. X's parents and for Miss Y. Moreover those interceptions could be done in a limited period of time to avoid storage capacity issues.

Note that these last pieces of information are very relevant and very useful in order to cope with the end-users overall mobility, because it is a solution to define "fixed points" in an interception process.

The second added value of the inventive software module is in the different algorithms developed which analyze and correlate all those above results to provide technical alternatives to perform most efficiently the LEA interception order.

In this case, it is possible to make intelligent interception based on real information on the target. Correlation operations can be defined before launching the interception process to avoid multiplication of the same data during the interception.

The main advantages of the inventive software module are the capabilities to:
- Accelerate the phase of technical deployment after a LEA interception request;
- Enrich and extend automatically LEA interception target criteria by using internal network information;
- Capture the most efficient data to limit data storage capacities and avoiding a flooding of data;
- Simplifying the processes of data correlation, analysis and treatment by LEAs.

The inventive software module can be implemented in a real time process of an overall LI IP management. The IP LI real time approach supposes dynamic probes deployment and dynamic NE LI functionalities configuration.

With the inventive software tool, telecom operators are supported in planning and defining the IP LI measures requested from them by a LEA order, so they are enabled to act according to the order faster and more efficiently.

## Claims

1. Software module, IP LI DM, for providing a network or system operator with information about options for deploying internet protocol, IP, lawful interception, LI, capabilities, wherein the software module, IP LI DM, comprises means adapted to perform the following steps when run on a computer:
F1: receive interception orders from a legal enforcement agency, LEA, wherein the interception orders comprise initial arguments about a target to be intercepted;
F2: automatically send information requests to:
- network services about the IP activities of said target in order to enrich the initial arguments about said target and gather information about the target behaviour on IP services;
- topology management tools and/or directly to network equipment, NE, to find available lawful interception, LI, functions within existing network equipment, NE, around the target;
F3: receive answers to said information requests from the different network services, topology management tools and/or network equipments, and correlate the available information, i.e. initial arguments from the legal enforcement agency, LEA, and said answers, to determine suitable interception measures;
F4: display the determined suitable interception measures and/or initiate the determined interception measures based on a network operator or system operator decision.

2. Software module according to claim 1, **characterized in that** the software module, IP LI DM, comprises an interface for an IP multimedia subsystem, IMS.

3. Software module according to claim 1, **characterized in that** during step F2, information about said target which is managed by a network operator at different layers with respect to the OSI model is requested.

4. Software module according to claim 1, **characterized in that** during step F2, the network services to which requests are sent to include
- an authentication server
- and/or an IMS enabler
- and/or Profile Directory,
- and/or a billing server.

5. Software module according to claim 1, **characterized in that** during step F3, the determined measures include proposals of activation of already available LI functions of deployed network equipment, NE, and/or proposals of installation of LI probes at specific locations.

6. Software module according to claim 1, **characterized in that** during step F3, several alternative suitable measures to make the interception are determined.

7. Software module according to claim 1, **characterized in that** during step F3, for correlating the available information and the determining of suitable measures, an expert system of the software module, IP LI DM, based on a rule engine which applies a set of threshold-based rules included in a database, is used.

8. IP interception device, **characterized in that** the IP interception device has installed a software module, IP LI DM, according to one of the claims 1 through 7.

## Patentansprüche

1. Softwaremodul (IP LI DM) zur Versorgung eines Netzwerk- oder Systembedieners mit Informationen über Optionen bei der Anwendung von Ressourcen zum gesetzlichen Abhören (Lawful Interception, LI) von Internetprotokollen (IP), wobei besagtes Softwaremodul (IP LI DM) Mittel umfasst, die dafür ausgelegt sind, um die folgenden Schritte auszuführen, wenn es auf einem Computer ausgeführt wird:
F1: Empfang von Abhöranweisungen von einer Gesetzesvollzugsbehörde (Legal Enforcement Agency, LEA), wobei die Abhöranweisungen Ausgangsargumente zu einem Abhörziel umfassen;
F2: automatisches Senden von Informationsanfragen an:
- Netzwerkdienste zu IP-Aktivitäten besagten Abhörziels zur Anreicherung der Ausgangsargumente zu besagtem Abhörziel und zur Sammlung von Informationen zu dem Verhalten des Abhörziels im Bereich von IP-Diensten;
- Topologieverwaltungsmittel und/oder direkt an Netzwerkanlagen (Network Equipment, NE), um verfügbare Funktionen für das gesetzliche Abhören (LI) in den bestehenden Netzwerkanlagen (NE) im Umfeld des Abhörziels ausfindig zu machen;
F3: Empfang von Antworten auf besagte Informationsanfragen von verschiedenen Netzwerkdiensten, Topologieverwaltungsmitteln und/oder Netzwerkanlagen und das Korrelieren der verfügbaren Informationen wie etwa Ausgangsargumente der Gesetzesvollzugsbehörde (LEA) mit besagten Antworten, um passende Abhörmaßnahmen zu bestimmen;
F4: Anzeigen der bestimmten passenden Abhörmaßnahmen und/oder Starten der bestimmten Abhörmaßnahmen auf der Grundlage einer Entscheidung eines Netzwerk- oder Systembedieners.

2. Softwaremodul nach Anspruch 1, **dadurch gekennzeichnet, dass** das Softwaremodul (IP LI DM) eine Schnittstelle für ein IP-Multimedia-Subsystem (IMS) umfasst.

3. Softwaremodul nach Anspruch 1, **dadurch gekennzeichnet, dass** im Verlauf von Schritt F2 Informationen zu besagtem, von einem Netzwerkbediener auf verschiedenen Ebenen bezüglich des OSI-Modells bearbeiteten Abhörziel angefordert werden.

4. Softwaremodul nach Anspruch 1, **dadurch gekennzeichnet, dass** im Verlauf von Schritt F2 an folgende Netzwerkdienste Anfragen gesendet werden:
- ein Authentifizierungsserver
- und/oder ein IMS-Aktivierer
- und/oder ein Profilverzeichnis
- und oder ein Abrechnungsserver.

5. Softwaremodul nach Anspruch 1, **dadurch gekennzeichnet, dass** im Verlauf von Schritt F3 die bestimmten Maßnahmen Vorschläge zur Aktivierung bereits verfügbarer LI-Funktionen der angewendeten Netzwerkanlagen (NE) und/oder Vorschläge zur Installation von LI-Erfassungsvorrichtungen an spezifischen Stellen umfassen.

6. Softwaremodul nach Anspruch 1, **dadurch gekennzeichnet, dass** im Verlauf von Schritt F3 mehrere alternative, geeignete Messungen für das Vornehmen des Abhörens bestimmt werden.

7. Softwaremodul nach Anspruch 1, **dadurch gekennzeichnet, dass** im Verlauf von Schritt F3 zum korrelieren der verfügbaren Informationen und zum Bestimmen der geeigneten Maßnahmen ein Expertensystem des Softwaremoduls (IP LI DM) verwendet wird, was auf der Grundlage einer Rule Engine erfolgt, welche einen Satz grenzwertbasierter Regeln aus einer Datenbank anwendet.

8. IP-Abhörvorrichtung, **dadurch gekennzeichnet, dass** auf der IP-Abhörvorrichtung ein Softwaremodul (IP LI DM) nach einem der Ansprüche 1 bis 7 installiert ist.

## Revendications

1. Module logiciel, IP LI DM, destiné à fournir à un opérateur de réseau ou de système des informations sur les options de déploiement de capacités d'interception légale, LI, sur le protocole Internet, IP, dans lequel le module logiciel, IP LI DM, comprend des moyens adaptés pour réaliser les étapes suivantes lorsqu'il est exécuté sur un ordinateur :
F1 : recevoir des ordres d'interception d'un organisme d'application de la loi, LEA, les ordres d'interception comprenant des arguments initiaux concernant une cible à intercepter ;
F2 : envoyer automatiquement des demandes d'information à :
- des services réseau à propos des activités IP de ladite cible afin d'enrichir les arguments initiaux concernant ladite cible et de collecter des informations sur le comportement de la cible sur les services IP ;
- des outils de gestion de topologie et/ou directement à des équipements réseau, NE, afin de trouver des fonctions d'interception légale, LI, disponibles dans les équipements réseau, NE, existants autour de la cible ;
F3 : recevoir des réponses auxdites demandes d'information en provenance des différents services réseau, outils de gestion de topologie et/ou équipements réseau, et corréler les informations disponibles, à savoir les arguments initiaux provenant de l'organisme d'application de la loi, LEA, et lesdites réponses, afin de déterminer les mesures d'interceptions appropriées ;
F4 : afficher les mesures d'interception appropriées déterminées et/ou lancer les mesures d'interception déterminées sur la base d'une décision d'un opérateur de réseau ou d'un opérateur de système.

2. Module logiciel selon la revendication 1, **caractérisé en ce que** le module logiciel, IP LI DM, comprend une interface pour un sous-système multimédia IP, IMS.

3. Module logiciel selon la revendication 1, **caractérisé en ce que** lors de l'étape F2, les informations concernant ladite cible qui sont gérées par un opérateur de réseau à différents niveaux du modèle OSI sont requises.

4. Module logiciel selon la revendication 1, **caractérisé en ce que** lors de l'étape F2, les services réseau auxquels les demandes sont envoyées incluent :
- un serveur d'authentification,
- et/ou un outil « IMS enabler »,
- et/ou un répertoire de profils,
- et/ou un serveur de facturation.

5. Module logiciel selon la revendication 1, **caractérisé en ce que** lors de l'étape F3, les mesures déterminées incluent des propositions d'activation de fonctions LI déjà disponibles dans des équipements réseau, NE, déployés, et/ou des propositions d'installation de sondes LI à des emplacements spécifiques.

6. Module logiciel selon la revendication 1, **caractérisé en ce que** lors de l'étape F3, plusieurs mesures alternatives appropriées pour réaliser l'interception sont déterminées.

7. Module logiciel selon la revendication 1, **caractérisé en ce que** lors de l'étape F3, afin de corréler les informations disponibles et la détermination des mesures appropriées, on utilise un système expert du module logiciel, IP LI DM, basé sur un moteur de règles qui applique un ensemble de règles fondées sur des seuils incluses dans une base de données.

8. Dispositif d'interception IP, **caractérisé en ce que** le dispositif d'interception IP a installé un module logiciel, IP LI DM, selon l'une des revendications 1 à 7.
